Europäisches Patentamt

European Patent Office

Office européen des brevets

(11) Publication number: **0 250 209 B1**

(12) **EUROPEAN PATENT SPECIFICATION**

(45) Date of publication of patent specification: **04.11.92**

(51) Int. Cl.5: **G02B 6/06**, D01D 5/30, D01F 8/04

(21) Application number: **87305338.3**

(22) Date of filing: **16.06.87**

(54) **Process of manufacturing a plastics optical fibre bundle.**

(30) Priority: **20.06.86 JP 144456/86**
**22.09.86 JP 221781/86**
**25.07.86 JP 114442/86**

(43) Date of publication of application:
**23.12.87 Bulletin 87/52**

(45) Publication of the grant of the patent:
**04.11.92 Bulletin 92/45**

(84) Designated Contracting States:
**DE FR GB NL**

(56) References cited:
**EP-A- 0 131 058**
**EP-A- 0 207 705**
**GB-A- 1 037 498**
**US-A- 3 556 635**

(73) Proprietor: **MITSUBISHI RAYON CO., LTD.**
**3-19, Kyobashi 2-chome Chuo-Ku**
**Tokyo 104(JP)**

(72) Inventor: **Terada, Hiromu**
**3-1, Kurokawa 3-chome**
**Otake-shi Hiroshima(JP)**
Inventor: **Sakunaga, Kenichi**
**10-22, Honmachi 1-chome**
**Otake-shi Hiroshima(JP)**
Inventor: **Fukahori, Naoyuki**
**19-9, Teraodai 3-chome**
**Ayase-shi Kanagawa(JP)**

(74) Representative: **West, Alan Harry et al**
**R.G.C. Jenkins & Co. 26 Caxton Street**
**London SW1H 0RJ(GB)**

EP 0 250 209 B1

## Description

Description for the following Contracting States : DE, FR, GB

The present invention relates to a process of manufacturing a plastics optical fiber bundle containing 100 to 10,000 light transmitting optical fibers embedded in a matrix, the light transmitted by this type of optical fiber bundle being much brighter than the light transmitted by a silica optical fiber bundle.

A silica optical fiber bundle comprising silica fibers which have a diameter smaller than 200 $\mu$ and which are arranged at a high degree of orientation, is capable of optical transmission of an image and is commonly used in the field of medical instruments, for example, as an endoscope.

The diameter of individual fibers in a silica optical fiber bundle can be made smaller than those in the plastics type optical fiber bundle, and therefore, a silica optical fiber bundle having 10,000 or more individual optical fibers has been developed. However, this type of optical fiber is seriously defective in that, since the optical fibers have a very small diameter and very low resistance to bending, the silica optical fiber is relatively easily broken during use and thus results in image defects.

Moreover, because of the properties of silica glass, optical fiber bundles formed of silica are inevitably rigid, and therefore when the optical fiber bundle is used as an image scope, it is difficult to bend and thus the visual field is narrow.

Accordingly, the development of a plastics optical fiber bundle comprising many plastics optical fibers, which is not easily broken and which can be bent more easily than a silica optical fiber bundle has been attempted. For example, such attempts are disclosed in U.S. Patent No. 3,556,635, Japanese Unexamined Patent Publication No. 56-39505, and European Patent No. 0.0207705-A2.

U.S. Patent No. 3,356,635, describes a plastics optical fiber bundle which is prepared by using an fiber-matrix conjugate spinning spinneret. The conjugate spinning spinneret described in that patent document has a complicated structure in that core-forming pipes are vertically implanted in a sheath-forming orifice plate which comprises also vertically implanted sheath-forming pipes. Accordingly, dead spaces are formed, and during conjugate spinning, hot molten polymer collects in these dead spaces and therefore, it is difficult to manufacture a plastics optical fiber bundle having a good light-transmitting property with that type of spinneret.

Furthermore, the optical fiber bundle described in U.S. Patent No. 3,356,635, is comprised of light-transmitting fibers which are substantially rectangular in cross-section, these rectangular fibers being regularly arranged in the matrix component. The area occupied by the rectangular fibers is less than 40% of the sectional area of the matrix component. Accordingly, the optical fiber bundle is defective in that it is unable to transmit a bright image.

Japanese Unexamined Patent Publication No. 56-39505 describes an ultrafine optical fiber bundle having optical fibers embedded in a matrix, and teaches that the number of fibers is about a maximum of 100,000 and that the cross-sectional area occupied by the fibers is 50 to 98%. The optical fiber bundle is circular in cross section as are the optical fibers located in the central portion of the fiber bundle. These central fibers have a good image transmitting property. However, the cross-sections of the fibers located peripherally are tetragonal to polygonal and consequently the image-transmitting property of these fibers is drastically reduced. Accordingly, the image-transmitting property of the plastics optical fiber bundle as a whole is unsatisfactory.

A process for preparing an optical fiber bundle is described in European Patent No. 0207705-A2 (intermediate document). In this process, a conjugate spinneret is used for preparing a fiber-matrix optical fiber bundle, which comprises a core-forming orifice plate having many core-forming nozzle holes, a sheath-orming orifice plate, a matrix-forming orifice plate having many matrix-forming nozzle holes and a fiber-gathering orifice plate, wherein the end portions of the matrix-forming nozzle holes on the side facing the fiber-gathering orifice plate are conically enlarged. By this process, plastics optical fiber bundle in which the fibers are hexagonally packed and embedded in the matrix can be obtained, the fiber bundle having a good image-transmitting property. However, again fibers located peripherally within the fiber bundle have a tetragonal to octagonal structure, and consequently it is very difficult to increase the core occupancy ratio above 50%. Accordingly, a further improvement in the image-transmitting property is desired.

European Patent No. 0131058 also describes an optical fiber bundle having a core/sheath/embedding material structure and which is manufactured using a composite spinneret. However, the properties of that optical fiber bundle can be further improved by optimising the process for manufacturing the fiber bundles.

A further improvement in the image transmitting property is clearly desired. Accordingly, the present invention provides a process of manufacturing a plastics optical fiber bundle having a much improved image-transmitting property, the fiber bundle having also a substantially rectangular cross-section and

2

containing 100 to 10,000 hexagonally packed optical fibers embedded in a matrix, each of the fibers having a substantially circular cross-section and a core-sheath structure, said fiber bundle having a core occupancy ratio "S" of at least 50% and a brightness index "I" of at least 4.5 x $10^{-2}$, which is defined as

$$I = S \cdot NA^2 \cdot 10^{-(\alpha L/10)}$$

wherein S is the cross-sectional area of the cores compared with the cross-sectional area of the entire bundle, $\alpha$ is the transmission loss in dB/m, NA is the numerical aperture and L is the fiber length in meters and being between 0.1 and 20 m; the process comprising:

- using a conjugate spinneret containing at least four superposed orifice plates formed by the sequence of: (a) a core forming orifice plate (31) having 100 to 10,000 core-forming nozzle holes (31a), (b) a sheath forming orifice plate (32) having the same number of sheath-forming nozzle holes (32a), (c) a matrix forming orifice plate (33,43) having the same number of matrix-forming nozzle holes (33a,43a) and (d) an orifice plate (38) having a substantially rectangular fiber-gathering hole (39), the end portions of the holes (33a,43a) in the matrix forming orifice plate (33,43) on the side facing the fiber gathering orifice plate (38) being conically enlarged;
- supplying melts of a core-forming polymer, of a sheath-forming polymer and of a matrix forming polymer to the nozzle holes of said respective orifice plates;
- extruding the core-forming polymer through the core-forming nozzle holes (31a) to form the core, the sheath-forming polymer through the sheath-forming nozzle holes (32a) to form a fiber of a core-sheath structure, and the matrix-forming polymer through the matrix-forming nozzle holes (33a) to cover the fiber with the matrix polymer under such conditions that the spinning draft D, defined as

$$D = \text{(hole diameter of a spinning nozzle)}^2/\text{(fiber diameter of undrawn fiber)}^2$$

has a value of at least 30,
- gathering and adhering together the resulting optical fibers in the gathering hole (49) and,
- drawing the gathered and adhered fibers at a temperature of 100 to 300°C at a draw ratio of 1.05 to 5.0 to form said fiber bundle.

The invention will now be described by way of example only with reference to the accompanying drawings in which:

Figure 1 is an enlarged view of a cross-section of the plastics optical fiber bundle;

Figure 2 is a partially enlarged view of Figure 1 showing the hexagonally packed optical fibers embedded in the matrix of the plastics optical fiber bundle;

Figure 3 is a cross-sectional view of the conjugate spinneret for use in manufacturing the plastics optical fiber bundle;

Figure 4 is an partially enlarged view of Figure 3 showing the shape of the matrix-forming nozzle holes;

Figure 5 is a perspective view of a fiber-gathering orifice plate;

Figure 6 shows the drawing step used for efficiently preparing the optical fiber bundle; and,

Figure 7 is a diagram of the apparatus for measuring the resistance of the optical fiber bundle against repeated bending and which was adopted in the examples given hereinafter.

The brightness index I of the optical transmission of an image by the optical fiber bundle is defined by the following formula (1):

$$I = S \cdot NA^2 \cdot 10^{-(\frac{\alpha L}{10})} \tag{1}$$

wherein S is the cross-sectional area of the cores compared with the cross-sectional area of the entire bundle, hereinafter referred to as the core-occupancy ratio, $\alpha$ is the transmission loss (dB/m), NA is the numerical aperture, and L is the fiber length in meters.

The brightness index I of the optical fiber bundle manufactured according to the present invention must be at least 4.5 x $10^{-2}$, and preferably more than 5 x $10^{-2}$.

If the occupancy ratio S (defined in formula 1) is lower than 50%, then the brightness index I of the transmitted image by an individual optical fiber is less than 4.5 x $10^{-2}$, and therefore the brightness of the image transmitted by the optical fiber bundle as a whole is drastically reduced. Accordingly, the occupancy ratio S must be at least 50%, preferably at least 55%, and more preferably at least 60%.

The numerical aperture NA, which contributes to the brightness of the transmitted image, is defined by the following formula (2):

$$NA = \sqrt{n_1{}^2 - n_2{}^2} \qquad\qquad (2)$$

wherein $n_1$ is the refractive index of the core-forming polymer and $n_2$ is the refractive index of the sheath-forming polymer.

In the present invention, it is important that the difference between the refractive index $n_1$ of the core-forming polymer and the refractive index $n_2$ of the sheath-forming polymer in the matrix be at least 0.01. In the case of a optical fiber bundle formed from a combination of polymers in which the value of $(n_1 - n_2)$ is less than 0.01, a phenomenon is observed in which light introduced into the core leaks into the sheath layer, and the brightness of the transmitted image is much reduced.

Preferably, the core-forming polymer having the refractive index $n_1$ and the sheath-forming polymer having the refractive index $n_2$ are selected so that the numerical aperture NA defined by the formula (2) is at least 0.16, preferably at least 0.3. In the case of a optical fiber bundle with an NA value of less than 0.16, the brightness index I is less than $4.5 \times 10^{-3}$ and therefore a sharp and sufficiently bright image cannot be obtained.

Optical fiber bundles manufactured of the in accordance with the present invention, preferably have a light transmission loss $\alpha$ of less than 3 dB/m, and more preferably of less than 1.3 dB/m. When $\alpha$ exceeds 3 dB/m, it is difficult to obtain a brightness index I of at least $4.5 \times 10^{-2}$, even when the core component has a large numerical aperture. In order to reduce the $\alpha$ value, the core-forming polymer can be is purified.

In the formula (1), the value L denotes the length of the fiber in meters and is ordinarily 0.1 to 20 m.

The cross sectional structure of the fibers in the optical fiber bundle is substantially circular, and the number of fibers, is 100 to 10,000. If the number of fibers exceeds 10,000 then, it becomes difficult to maintain uniformity in the obtained optical fiber bundle. Preferably the number of fibers in the optical fiber bundle is 150 to 5,000.

In order to increase the image resolution of the plastics optical fiber bundle, preferably the number of fibers per unit sectional area of the matrix is adjusted so that, when a converging lens and a light-receiving face are positioned at both the ends of the optical fiber and a test pattern of a resolving power test target (USAF 1951) is transmitted by white light, the resolving power is at least 2 line pairs/mm where each line pair consists of one white line and one black line. In the case of a plastic optical fiber bundle having an individual fiber density within the bundle such that the resolving power is less than 2 line pairs/mm, it is difficult to obtain a well resolved image. Preferably the density is such that the resolving power is 5 to 30 line pairs/mm.

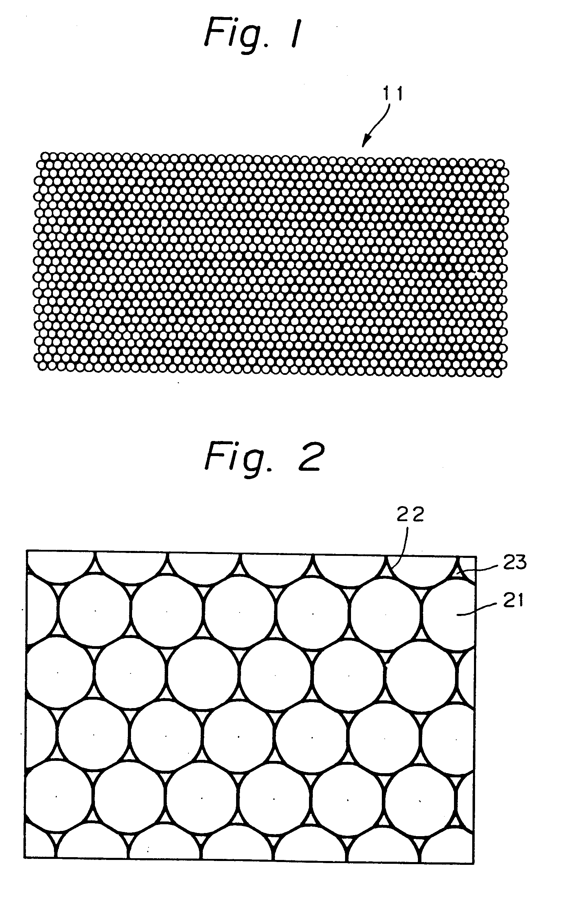

In order to obtain a plastics optical fiber bundle having a high resolution as described above, the fiber bundle must be substantially rectangular in cross-section as shown in Fig. 1. Figure 1 is a cross-sectional view of the plastics optical fiber bundle of the present invention, in which the number of optical fibers embedded in the matrix is 1350 and the core occupancy ratio is at least 50%. In order to obtain a core occupancy ratio of at least 50%, preferably both sides of the rectangular shape of the optical fiber bundle have a fine sine-curved structure as shown in Fig. 1.

If the cross-sectional shape of the optical fiber bundle differs from the rectangular shape, for example, a more circular shape, then the fibers can only be hexagonally packed in the central portion of the optical fiber bundle, this arrangement being distorted in the peripheral portion where the cross-sectional shape of the fibers becomes polygonal, with the result that sharp images cannot be obtained.

In the plastics optical fiber of the present invention, the fibers are hexagonally packed and embedded in a matrix as shown in Fig. 2. In Fig. 2, reference numeral 21 represents the core section, reference numeral 22 represents the sheath, and reference numeral 23 represents the matrix. By hexagonally packing the fibers in the matrix as shown in Fig. 2, an optical fiber bundle having a high image element density and a high resolution is obtained.

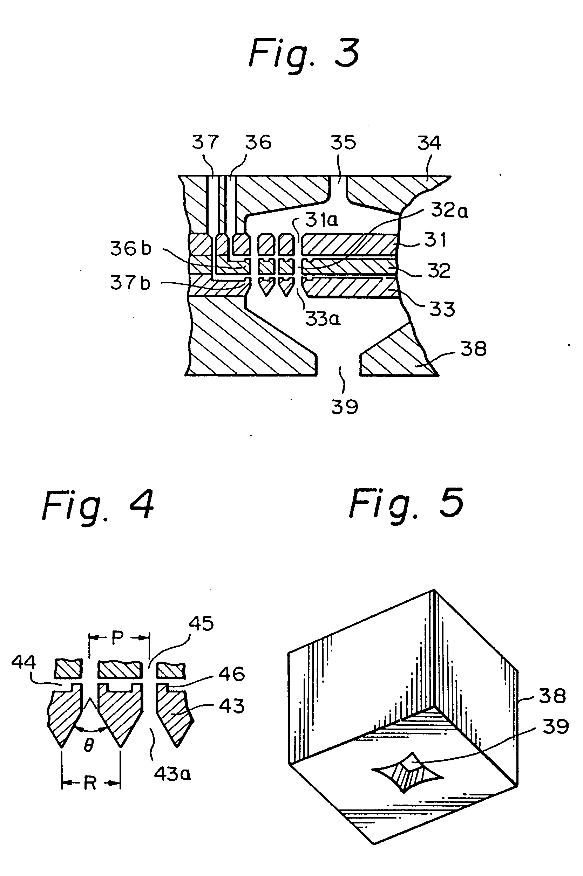

Figure 3 is a cross-sectional view of the conjugate spinneret preferably used in manufacturing the plastics optical fiber bundle. The spinneret comprises four superposed orifice plates, formed by the sequence of: a core-forming orifice plate 31, a sheath-forming orifice plate 32, a matrix-forming orifice plate 33, and a fiber-gathering orifice plate 38 to form adhered fibers.

In Fig. 4, reference numerals 31a, 32a and 33a represent nozzle holes for spinning the core, sheath and matrix components, respectively.

One of the characteristic features of this type of conjugate spinning spinneret is the shape of the nozzle hole 33a of the matrix-forming orifice plate 33 which is illustrated in Fig. 4. In Fig. 4, reference numeral 43 represents a matrix-forming orifice plate, and reference numeral 43a represents a nozzle hole for spinning the matrix and core components. As shown in Fig. 4, the hole 43a for spinning the matrix and core components is conically enlarged on the side facing the fiber-gathering orifice plate. Furthermore, preferably the lower end of the nozzle hole defines the lower ends of the adjacent holes for spinning the matrix and core components.

Preferably, the nozzle hole 43a is formed so that R ≥ P, and especially 2P ≥ R, where P is the distance between the centers of two adjacent holes and R is the diameter of the lower end of the nozzle hole 43a. Furthermore, preferably $R = \sqrt{P^2/3}$. The angle $\theta$ of the conically enlarged opening of the nozzle hole 43a should be in the range of $10° < \theta < 45°$.

If the above parameters are adopted, molten polymers flow very smoothly, and laminar flows of the core and matrix components are substantially maintained in this nozzle hole resulting in the plastics optical fiber bundle having a more uniform cross-section than the conventional fiber bundles, as shown in Fig. 1.

If the nozzle hole of the matrix-forming orifice plate has a conically enlarged opening as described above, the core-matrix fiber in the thermally plasticized state separates from the matrix-forming nozzle without meandering or eccentricity. Accordingly, the occurrence of uneven fineness or insufficient circularity can be effectively prevented, and the uniformity of the fiber can be greatly improved. If these many separate fibers are gathered by a fiber-gathering orifice plate 38 having a substantially rectangular lower end, as shown in Fig. 3 and Fig. 5, the resultant plastics optical fiber bundle has a substantially rectangular cross-section. If an ordinary fiber-gathering orifice plate having a circular lower end is used, the optical fiber bundle in cross-section becomes substantially circular and the hexagonal arrangement of fibers in the matrix is distorted. Furthermore, the the fibers become polygonal in shape rather than circular and therefore a plastics optical fiber capable of transferring an image at a high resolving power is difficult to obtain. Preferably, the fiber-gathering hole on the lower end of the fiber-gathering orifice plate is substantially rectangular in shape, and preferably has convex sides also.

In order to manufacture the plastics optical fiber bundle, preferably a spinning-drawing process is adopted in which the core, sheath and matrix components are supplied to their respective nozzles, melt spinning is carried out under conditions such that the spinning draft D defined by the following formula (3) is at least 30:

$$D = (\text{hole diameter of spinning nozzle})^2/(\text{fiber diameter of undrawn fiber})^2 \qquad (3)$$

and drawing is then carried out at a temperature of 100 to 300°C and a draw ratio of 1.05 to 5.0.

A plastics optical fiber obtained by carrying out melt spinning at a spinning draft D lower than 30 is rigid and is easily broken, and it then becomes necessary to reduce the speed of taking up the undrawn optical fiber and, therefore, the shape-retaining stability of the fiber polymer extruded from each nozzle hole is reduced. Therefore, in order to obtain a plastics optical fiber bundle having a good image transfer property, preferably spinning is carried out at a spinning draft D of 30 to 10,000.

Another important property required for the optical fiber bundle is transparency. Although the optical fiber bundle comprises fibers which are uniform and have a substantially circular cross-section, and have an excellent softness, it is also desirable that light transmission loss be kept to a minimum. In order that the plastics optical fiber bundle has sufficient softness, it is necessary to perform spinning at a high draft D. However, a concomitant drastic increase in the transmission loss is often observed. In order to avoid this disadvantage, preferably spinning is carried out under conditions such that the spinning draft D defined by the formula (3) is at least 30, and the resulting undrawn optical fiber is heat-drawn at a temperature of 100 to 200°C at a draw ratio of 1.05 to 5.

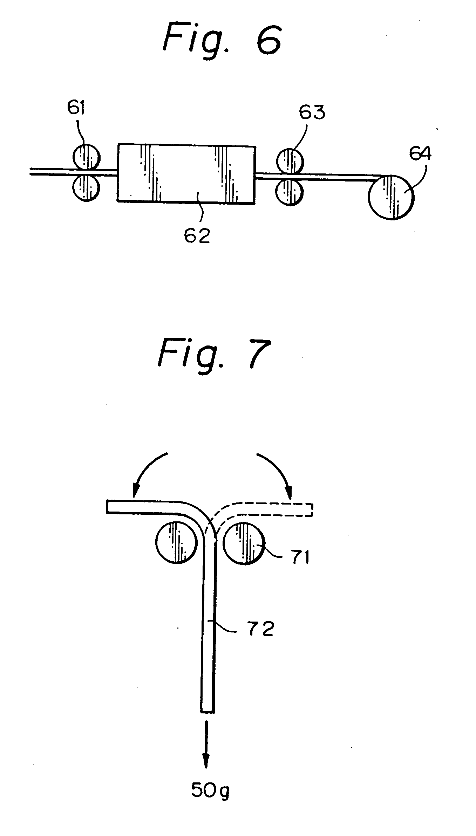

Figure 6 is a diagram of a drawing step preferably used in the manufacture of the plastics optical fiber bundle at a high efficiency. In Fig. 6, reference numeral 61 represents a take-up roller for an undrawn optical fiber bundle extruded from the conjugate spinneret, reference numeral 62 represents a drawing heater, reference numeral 63 represents a drawing roller, and reference numeral 64 represents a winder.

Examples of the plastics suitable for forming the core and sheath components of the optical fiber bundle are as follows: polymethyl methacrylate (n = 1.49), a copolymer (n = 1.47 to 1.50) composed mainly of methyl methacrylate, polystyrene (n = 1.58), a copolymer (n = 1.50 to 1.58) composed mainly of styrene, a styrene/acrylonitrile copolymer (n = 1.56), poly-4-methylpentene-1 (n = 1.46), an ethylene/vinyl acetate copolymer (n = 1.46 to 1.50), a polycarbonate (n = 1.50 to 1.57), polychlorostyrene (n = 1.61), polyvinylidene chloride (n = 1.63), polyvinyl acetate (n = 1.47), a methyl methacrylate/styrene, vinyltoluene or $\alpha$-methylstyrene/maleic anhydride terpolymer or quadripolymer (n = 1.50 to 1.58), polydimethylsiloxane (n = 1.40), polyacetal (n = 1.48), polytetrafluoroethylene (n = 1.35), polyvinylidene fluoride (n = 1.42), polytrifluoroethylene (n = 1.40), polyperfluoropropylene (n = 1.34), fluoroethylene copolymers or ter-

EP 0 250 209 B1

polymers (n = 1.35 to 1.40), a polyvinylidene fluoride/polymethyl methacrylate blend (n = 1.42 to 1.46), copolymers composed mainly of a fluoromethacrylate represented by the general formula $CH_2 = C(CH_3)$-COORf in which Rf stands for $(CH_2)_n(CF_2)_nH$ (n = 1.37 to 1.42), $(CH_2)_m(CF_2)_nF$ (n = 1.37 to 1.40), CH-$(CF_3)_2$ (n = 1.38), $C(CF_3)_3$ (n = 1.36), $CH_2CF_2CHFCF_3$ (n = 1.40) or $CH_2CF(CF_3)_2$ (n = 1.37), copolymers of these fluoromethacrylates (n = 1.36 to 1.40), copolymers of such a fluoromethacrylate with methyl methacrylate (n = 1.37 to 1.43), polymers composed mainly of a fluoroacrylate represented by the general formula-$CH_2\dot{C}H \cdot COOR'f$ in which R'f stands for $(CH_2)_m(CF_2)_nF$ (n = 1.37 to 1.40), $(CH_2)_m(CF_2)_nH$ (n = 1.37 to 1.41), $CH_2CF_2CHF$-$CF_3$ (n = 1.41) or $CH(CH_3)_2$ (n = 1.38), copolymers of these fluoroacrylate (n = 1.36 to 1.41), copolymers of such a fluoroacrylate and a fluoromethacrylate as described above (n = 1.36 to 1.41), copolymers of these fluoroacrylate and fluoromethacrylate and methyl methacrylate (n = 1.37 to 1.43), and homopolymers and copolymers (n = 1.37 to 1.42) composed mainly of a 2-fluoroacrylate represented by the general formula $CH_2 = CF \cdot COOR''f$ in which R''f stands for $CH_3$ , $(CH_2)_m(CF_2)_nF$, $(CH_2)$-$_m(CF_2)_nH$, $CH_2CF_2CHFCF_3$ or $C(CF_3)_2$.

Examples of the plastics suitable for the matrix component are as follows: polyamides, polyester elastomers, polyamide elastomers, polystyrene elastomers, polyolefin elastomers, poly-4-methylpentene-1, polyvinylidene fluoride, ionomers, ethylene/ethyl acrylate copolymers, ethylene/vinyl acetate copolymers, vinylidene fluoride copolymers, polymethyl methacrylate, polystyrene, ABS, polybutylene terephthalate and polyethylene, and water-soluble polymers having a solubility of at least 10 g/ℓ in warm water at 80°C, such as polyethylene glycol, polyvinyl alcohol, polyacrylamide, polyvinylpyrrolidone, and carboxymethyl cellulose. In order to obtain an optical fiber bundle capable of transferring a sharp and bright image, preferably a polymer having a flowability larger than that of the sheath-forming polymer for forming cores at the spinning step is selected as the matrix-forming polymer.

The present invention will now be described in detail with reference to the following examples.

In the following examples, the softness was evaluated by measuring the resistance against repeated bending with apparatus shown in Fig. 7. Referring to Fig. 7, the optical fiber bundle was repeatedly bent at a bending radius of 25 mm and a bending angle of 180°, and when the retention ratio of the quantity of transmitted light based on the initial value was lower than 80%, the number of bending repetitions was counted. In Fig. 7, reference numeral 71 represents a bending rod and reference numeral 72 represents a sample fiber.

Example 1

Conjugate spinning was carried out by using a conjugate spinning spinneret having a structure as shown in Fig. 3, and Fig. 5 and wherein an angle $\theta_1$ was 15°. The hole number was as shown in Table 1. Polymethyl methacrylate having a refractive index of 1.492 was used as the core component and a perfluoroalkylmethacrylate polymer having a refractive index of 1.415 was used as the sheath component. Furthermore, polymethyl methacrylate was used as the matrix component. A plastcs optical fiber bundle having the properties shown in Table 1 was obtained.

In each plastics optical fiber bundle of Runs 1 to 6 (see Table 1), fibers were hexagonally packed as shown in Fig. 1, and a sharp and fine image could be transmitted and the brightness of that transmitted image was very high. However, in the optical fiber bundle of Run 3, the transmitted image was rough and the brightness was low.

6

Table 1

| | Run 1 | Run 2 | Run 3 | Run 4 | Run 5 | Run 6 |
|---|---|---|---|---|---|---|
| Number of holes | 1350 | 1350 | 1350 | 1350 | 1350 | 2990 |
| Core diameter ($\mu$) | 10 | 20 | 20 | 50 | 80 | 10 |
| NA | 0.47 | 0.47 | 0.47 | 0.47 | 0.47 | 0.47 |
| $n_1 - n_2$ | 0.077 | 0.077 | 0.077 | 0.077 | 0.077 | 0.077 |
| Core occupancy ratio (%) | 60 | 69 | 40 | 75 | 80 | 55 |
| Transmission loss (dB/m) | 1.3 | 1.1 | 1.1 | 1.0 | 0.85 | 1.6 |
| Length (m) of optical fiber | 2 | 3 | 3 | 5 | 5 | 2 |
| Brightness index I of optical fiber ($\times 10^{-2}$) | 7.2 | 7.1 | 4.1 | 5.2 | 6.6 | 5.8 |
| Cross-Sectional shape of optical fiber bundle | rectangular | rectangular | rectangular | rectangular | rectangular | rectangular |
| Arrangement of | hexagonally packed | hexagonally packed | hexagonally packed | hexagonally packed | hexagonally packed | hexagonally packed |

fibers embedded in the matrix.

## Example 2

A optical fiber bundle having 1,350 fibers embedded in the matrix was prepared by carrying out conjugate spinning in the same manner as described in Example 1. The spinneret used to produce the optical fiber of of Run 5 in Table 1 was used. Polymethyl methacrylate having a refractive index of 1.492 was used as the core component, a vinylidene fluoride copolymer having a refractive index of 1.402 as the sheath component, and polymethyl methacrylate as the matrix component.

The resultant optical fiber bundle had a core occupancy ratio of 80%, the a matrix occupancy ratio of 10%, the value NA was 0.51, the value of ($n_1$ - $n_2$) was 0.09, the $\alpha$ value was 0.9 dB/m, and the value I was $7.4 \times 10^{-2}$. Therefore, a fine and sharp image having a high brightness could be transmitted.

Example 3

A optical fiber bundle having the properties shown in Table 2 was prepared by carrying out conjugate spinning by using a spinneret as shown in Figs. 3 to 5 and a hole number shown in Table 2. Polymethyl methacrylate having a refractive index of 1.492 and a melt flow rate of 1.2 was used as the core-forming polymer, a fluoromethacrylate polymer having a refractive index of 1.415 and a melt flow rate of 6 as the sheath-forming polymer, and a vinylidene fluoride copolymer having a melt flow rate of 12 as the matrix component.

As shown in Table 2, the resultant optical fiber bundle has a very good resolving power.

## Table 2

| | Run 7 | Run 8 | Run 9 | Run 10 |
|---|---|---|---|---|
| Number of holes | 2990 | 2990 | 1350 | 1350 |
| Arrangement of fibers embedded in the matrix fibers | hexagonally packed | hexagonally packed | hexagonally packed | hexagonally packed |
| Sectional shape of fibers | circular | circular | circular | circular |
| Cross-Sectional shape of optical fiber bundle | rectangular | rectangular | rectangular | rectangular |
| Resolving power (test target USAF 1951) (line pair/mm) | group 4, element 5 (25.39) | group 3, element 6 (14.3) | group 1, element 2 (2.24) | group 0, element 6 (1.78) |
| Transmission characteristic (sharpness of transferred image) | very sharp | very sharp | sharp | relatively obscure |
| Brightness index I of optical fiber bundle | $7.9 \times 10^{-2}$ | $10.8 \times 10^{-2}$ | $13.3 \times 10^{-2}$ | $15.1 \times 10^{-2}$ |
| Transmission loss (dB/m) | 2.3 | 1.6 | 0.91 | 0.70 |
| Core occupancy ratio (%) | 60 | 70 | 90 | 93 |
| fiber length (m) | 1 | 1 | 2 | 2 |
| fiber diameter (μ) | 16 | 28 | 180 | 225 |

## Example 4

A optical fiber bundle was prepared by carrying out conjugate spinning under conditions shown in Table 3 by using a conjugate spinneret shown in Figs. 3 to 5. Polymethyl methacrylate having a refractive index of 1.492 was used as the core-forming polymer, a fluoromethacrylate polymer having a refractive index of 1.415 as the sheath-forming polymer, and a vinylidene fluoride copolymer having a refractive index of 1.4020 as the matrix-forming polymer. The softness under repeated bending and the light-transmitting property expressed by the transmission loss of the resultant optical fiber bundle were determined. The results are shown in Table 3. When the spinning draft defined by the formula (3) was at least 30, the optical fiber bundle had excellent softness and when the spinning draft was at least 80, the softness was improved further. However when the spinning draft was lower than 30, although the light-transmitting property remained good, it became difficult to transfer an image having high resolution, and the optical fiber bundle had a poor softness.

Table 3

| | Run 11 | Run 12 | Run 13 | Run 14 | Run 15 | Run 16 | Run 17 | Run 18 | Run 19 |
|---|---|---|---|---|---|---|---|---|---|
| fiber diameter (μ) | 10 | 25 | 60 | 100 | 125 | 180 | 350 | 215 | 350 |
| Number of fibers | 1000 | 1000 | 250 | 250 | 250 | 250 | 100 | 250 | 100 |
| Spinning draft D | 4700 | 780 | 130 | 100 | 80 | 30 | 30 | 21 | 8 |
| Resistance against repeated bending (times) | above 1000 | above 1000 | above 1000 | above 1000 | above 1000 | 800 | 500 | 92 | 15 |
| Transmission loss (dB/m) | 3.0 | 2.3 | 2.5 | 1.8 | 1.86 | 1.43 | 0.65 | 0.82 | 0.36 |
| Brightness index I of bundle optical fiber ($\times 10^{-2}$) | 6.5 | 9.0 | 9.8 | 12.6 | 12.7 | 14.5 | 15.8 | 14.1 | 18.0 |
| Resolving power (line pair/mm) | 40.3 | 16.0 | 6.35 | 4.00 | 3.65 | 2.24 | 1.26 | 2.00 | 1.26 |
| Core occupance ratio (%) | 58 | 68 | 78 | 85 | 87 | 90 | 95 | 92 | 95 |
| fiber length (m) | 1 | 1 | 1 | 1 | 1 | 1 | 2 | 2 | 2 |

Plastics optical fiber bundles shown in Runs 11 to 17 of Table 3 were drawn under conditions shown in Table 4 by using the drawing apparatus shown in Fig. 6. The properties of the resultant optical fiber bundles are shown in Table 4.

11

## Table 4

| | Run 20 | Run 21 | Run 22 | Run 23 | Run 24 | Run 25 | Run 26 |
|---|---|---|---|---|---|---|---|
| Run in Table 3 | 11 | 12 | 13 | 14 | 15 | 16 | 17 |
| Drawing temperature (°C) | 140 | 135 | 135 | 145 | 160 | 180 | 180 |
| Draw ratio | 1.05 | 1.5 | 1.5 | 1.5 | 1.5 | 2.0 | 3.0 |
| Transmission loss (dB/m) | 1.3 | 1.05 | 1.03 | 0.82 | 0.86 | 0.68 | 0.39 |

Description for the following Contracting State : NL

The present invention relates to a process of manufacturing a plastics optical fiber bundle containing 100 to 10,000 light transmitting optical fibers embedded in a matrix, the light transmitted by this type of optical fiber bundle being much brighter than the light transmitted by a silica optical fiber bundle.

A silica optical fiber bundle comprising silica fibers which have a diameter smaller than 200 $\mu$ and which are arranged at a high degree of orientation, is capable of optical transmission of an image and is commonly used in the field of medical instruments, for example, as an endoscope.

The diameter of individual fibers in a silica optical fiber bundle can be made smaller than those in the plastics type optical fiber bundle, and therefore, a silica optical fiber bundle having 10,000 or more individual optical fibers has been developed. However, this type of optical fiber is seriously defective in that, since the optical fibers have a very small diameter and very low resistance to bending, the silica optical fiber is relatively easily broken during use and thus results in image defects.

Moreover, because of the properties of silica glass, optical fiber bundles formed of silica are inevitably rigid, and therefore when the optical fiber bundle is used as an image scope, it is difficult to bend and thus the visual field is narrow.

Accordingly, the development of a plastics optical fiber bundle comprising many plastics optical fibers, which is not easily broken and which can be bent more easily than a silica optical fiber bundle has been attempted. For example, such attempts are disclosed in U.S. Patent No. 3,556,635, Japanese Unexamined Patent Publication No. 56-39505, and European Patent No. 0.0207705-A2.

U.S. Patent No. 3,356,635, describes a plastics optical fiber bundle which is prepared by using an fiber-matrix conjugate spinning spinneret. The conjugate spinning spinneret described in that patent document has a complicated structure in that core-forming pipes are vertically implanted in a sheath-forming orifice plate which comprises also vertically implanted sheath-forming pipes. Accordingly, dead spaces are formed, and during conjugate spinning, hot molten polymer collects in these dead spaces and therefore, it is difficult to manufacture a plastics optical fiber bundle having a good light-transmitting property with that type of spinneret.

Furthermore, the optical fiber bundle described in U.S. Patent No. 3,356,635, is comprised of light-transmitting fibers which are substantially rectangular in cross-section, these rectangular fibers being regularly arranged in the matrix component. The area occupied by the rectangular fibers is less than 40% of the sectional area of the matrix component. Accordingly, the optical fiber bundle is defective in that it is unable to transmit a bright image.

Japanese Unexamined Patent Publication No. 56-39505 describes an ultrafine optical fiber bundle having optical fibers embedded in a matrix, and teaches that the number of fibers is about a maximum of 100,000 and that the cross-sectional area occupied by the fibers is 50 to 98%. The optical fiber bundle is circular in cross section as are the optical fibers located in the central portion of the fiber bundle. These central fibers have a good image transmitting property. However, the cross-sections of the fibers located peripherally are tetragonal to polygonal and consequently the image-transmitting property of these fibers is drastically reduced. Accordingly, the image-transmitting property of the plastics optical fiber bundle as a whole is unsatisfactory.

A process for preparing an optical fiber bundle is described in European Patent No. 0207705-A2 (intermediate document). In this process, a conjugate spinneret is used for preparing a fiber-matrix optical fiber bundle, which comprises a core-forming orifice plate having many core-forming nozzle holes, a sheath-orming orifice plate, a matrix-forming orifice plate having many matrix-forming nozzle holes and a fiber-gathering orifice plate, wherein the end portions of the matrix-forming nozzle holes on the side facing the fiber-gathering orifice plate are conically enlarged. By this process, a plastics optical fiber bundle in which the fibers are hexagonally packed and embedded in the matrix can be obtained, the fiber bundle having a good image-transmitting property. However, again fibers located peripherally within the fiber bundle have a tetragonal to octagonal structure, and consequently it is very difficult to increase the core occupancy ratio above 50%.

European Patent No. 0131058 also describes an optical fiber bundle having a core/sheath/embedding material structure and which is manufactured using a composite spinneret. However, the properties of that optical fiber bundle can be further improved by optimising the process for manufacturing the fiber bundles.

A further improvement in the image transmitting property is clearly desired. Accordingly, the present invention provides a process of manufacturing a plastics optical fiber bundle having a much improved image-transmitting property, the fiber bundle having also a substantially rectangular cross-section and containing 100 to 10,000 hexagonally packed optical fibers embedded in a matrix each of the fibers having a substantially circular cross-section and a core-sheath structure, said fiber bundle having a core occupancy ratio "S" of at least 50%; the process comprising:

- using a conjugate spinneret containing at least four superimposed orifice plates formed by the sequence of: (a) a core-forming orifice plate (31) having 100 to 10,000 core-forming nozzle holes (31a), (b) a sheath-forming orifice plate (32) having the same number of sheath-forming nozzle holes (32a), (c) a matrix-forming orifice plate (33,43) having the same number of matrix-forming nozzle holes (33a,43a), and (d) an orifice plate (38) having a substantially rectangular fiber-gathering hole (39) the end portions of the holes (33a,43a) in the matrix forming orifice plate (33,43) on the side facing the fiber-gathering orifice plate being conically enlarged;
- supplying melts of a core-forming polymer, of a sheath forming polymer and a matrix forming polymer to the nozzle holes of said respective orifice plates;
- extruding the core-forming polymer through the core-forming nozzle holes (31a) to form the core, the sheath-forming polymer through the sheath-forming nozzle holes (32a) to form a fiber of core-sheath structure, and the matrix-forming polymer through the matrix-forming nozzle holes (33a) to cover the fiber with the matrix polymer;
- gathering and adhering together the resulting optical fibers in the gathering hole (49); and
- drawing the gathered and adhered fibers to form said optical fiber bundle having a brightness index I, of at least $4.5 \times 10^{-2}$, which is defined as

$$I = S \cdot NA^2 \cdot 10^{-(\alpha L/10)}$$

wherein S is the cross-sectional area of the cores compared with the cross-sectional area of the entire bundle, $\alpha$ is the transmission loss of the fiber in dB/m, NA is the numerical aperture and L is the fiber length in meters and being between 0.1 and 20 m.

The invention will now be described by way of example only with reference to the accompanying drawings in which:

Figure 1 is an enlarged view of a cross-section of the plastics optical fiber bundle;

Figure 2 is a partially enlarged view of Figure 1 showing the hexagonally packed optical fibers embedded in the matrix of the plastics optical fiber bundle;

Figure 3 is a cross-sectional view of the conjugate spinneret for use in manufacturing the plastics optical fiber bundle;

Figure 4 is an partially enlarged view of Figure 3 showing the shape of the matrix-forming nozzle holes;

Figure 5 is a perspective view of a fiber-gathering orifice plate;

Figure 6 shows the drawing step used for efficiently preparing the optical fiber bundle; and,

Figure 7 is a diagram of the apparatus for measuring the resistance of the optical fiber bundle against repeated bending and, which was adopted in the examples given hereinafter.

The brightness index I of the optical transmission of an image by the optical fiber bundle is defined by the following formula (1):

$$I = S \cdot NA^2 \cdot 10^{-(\frac{\alpha L}{10})} \tag{1}$$

wherein S is the cross-sectional area of the cores compared with the cross-sectional area of the entire bundle, hereinafter referred to as the core-occupancy ratio, $\alpha$ is the transmission loss (dB/m), NA is the numerical aperture, and L is the fiber length in meters.

The brightness index I of the optical fiber bundle manufactured according to the present invention must be at least $4.5 \times 10^{-2}$, and preferably more than $5 \times 10^{-2}$.

If the occupancy ratio S (defined in formula 1) is lower than 50%, then the brightness index I of the transmitted image by an individual optical fiber is less than $4.5 \times 10^{-2}$, and therefore the brightness of the image transmitted by the optical fiber bundle as a whole is drastically reduced. Accordingly, the occupancy ratio S must be at least 50%, preferably at least 55%, and more preferably at least 60%.

The numerical aperture NA, which contributes to the brightness of the transmitted image, is defined by the following formula (2):

$$NA = \sqrt{n_1^2 - n_2^2} \qquad (2)$$

wherein $n_1$ is the refractive index of the core-forming polymer and $n_2$ is the refractive index of the sheath-forming polymer.

In the present invention, it is important that the difference between the refractive index $n_1$ of the core-forming polymer and the refractive index $n_2$ of the sheath-forming polymer in the matrix be at least 0.01. In the case of a optical fiber bundle formed from a combination of polymers in which the value of ($n_1 - n_2$) is less than 0.01, a phenomenon is observed in which light introduced into the core leaks into the sheath layer, and the brightness of the transmitted image is much reduced.

Preferably, the core-forming polymer having the refractive index $n_1$ and the sheath-forming polymer having the refractive index $n_2$ are selected so that the numerical aperture NA defined by the formula (2) is at least 0.16, preferably at least 0.3. In the case of a optical fiber bundle with an NA value of less than 0.16, the brightness index I is less than $4.5 \times 10^{-3}$ and therefore a sharp and sufficiently bright image cannot be obtained.

Optical fiber bundles manufactured of the in accordance with the present invention, preferably have a light transmission loss $\alpha$ of less than 3 dB/m, and more preferably of less than 1.3 dB/m. When $\alpha$ exceeds 3 dB/m, it is difficult to obtain a brightness index I of at least $4.5 \times 10^{-2}$, even when the core component has a large numerical aperture. In order to reduce the $\alpha$ value, the core-forming polymer can be is purified.

In the formula (1), the value L denotes the length of the fiber in meters and is ordinarily 0.1 to 20 m.

The cross-sectional structure of the fibers in the optical fiber bundle is substantially circular, and the number of fibers is 100 to 10,000. If the number of fibers exceeds 10,000 then it becomes difficult to maintain uniformity in the obtained optical fiber bundle. Preferably the number of fibers in the optical fiber bundle is 150 to 5,000.

In order to increase the image resolution of the plastics optical fiber bundle, preferably the number of fibers per unit sectional area of the matrix is adjusted so that, when a converging lens and a light-receiving face are positioned at both the ends of the optical fiber and a test pattern of a resolving power test target (USAF 1951) is transmitted by white light, the resolving power is at least 2 line pairs/mm where each line pair consists of one white line and one black line. In the case of a plastic optical fiber bundle having an individual fiber density within the bundle such that the resolving power is less than 2 line pairs/mm, it is difficult to obtain a well resolved image. Preferably the density is such that the resolving power is 5 to 30 line pairs/mm.

In order to obtain a plastics optical fiber bundle having a high resolution as described above, the fiber bundle must be substantially rectangular in cross-section as shown in Fig. 1. Figure 1 is a cross-sectional view of the plastics optical fiber bundle of the present invention, in which the number of optical fibers embedded in the matrix is 1350 and the core occupancy ratio is at least 50%. In order to obtain a core occupancy ratio of at least 50%, preferably both sides of the rectangular shape of the optical fiber bundle have a fine sine-curved structure as shown in Fig. 1.

If the cross-sectional shape of the optical fiber bundle differs from the rectangular shape, for example, a more circular shape, then the fibers can only be hexagonally packed in the central portion of the optical fiber bundle, this arrangement being distorted in the peripheral portion where the cross-sectional shape of the fibers becomes polygonal, with the result that sharp images cannot be obtained.

In the plastics optical fiber of the present invention, the fibers are hexagonally packed and embedded in a matrix as shown in Fig. 2. In Fig. 2, reference numeral 21 represents the core section, reference numeral 22 represents the sheath, and reference numeral 23 represents the matrix. By hexagonally packing the fibers in the matrix as shown in Fig. 2, an optical fiber bundle having a high image element density and a high resolution is obtained.

Figure 3 is a cross-sectional view of the conjugate spinneret preferably used in manufacturing the plastics optical fiber bundle. The spinneret comprises four superposed orifice plates, formed by the sequence of: a core-forming orifice plate 31, a sheath-forming orifice plate 32, a matrix-forming orifice plate 33, and a fiber-gathering orifice plate 38 to form adhered fibers.

In Fig. 4, reference numerals 31a, 32a and 33a represent nozzle holes for spinning the core, sheath and matrix components, respectively.

One of the characteristic features of this type of conjugate spinning spinneret is the shape of the nozzle hole 33a of the matrix-forming orifice plate 33 which is illustrated in Fig. 4. In Fig. 4, reference numeral 43 represents a matrix-forming orifice plate, and reference numeral 43a represents a nozzle hole for spinning the matrix and core components. As shown in Fig. 4, the hole 43a for spinning the matrix and core components is conically enlarged on the side facing the fiber-gathering orifice plate. Furthermore, preferably the lower end of the nozzle hole defines the lower ends of the adjacent holes for spinning the matrix and core components.

Preferably, the nozzle hole 43a is formed so that $R \geq P$, and especially $2P \geq R$, where P is the distance between the centers of two adjacent holes and R is the diameter of the lower end of the nozzle hole 43a. Furthermore, preferably $R = \sqrt{P^2/3}$. The angle $\theta$ of the conically enlarged opening of the nozzle hole 43a should be in the range of $10° < \theta < 45°$.

If the above parameters are adopted, molten polymers flow very smoothly, and laminar flows of the core and matrix components are substantially maintained in this nozzle hole resulting in the plastics optical fiber bundle having a more uniform cross-section than the conventional fiber bundles, as shown in Fig. 1.

If the nozzle hole of the matrix-forming orifice plate has a conically enlarged opening as described above, the core-matrix fiber in the thermally plasticized state separates from the matrix-forming nozzle without meandering or eccentricity. Accordingly, the occurrence of uneven fineness or insufficient circularity can be effectively prevented, and the uniformity of the fiber can be greatly improved. If these many separate fibers are gathered by a fiber-gathering orifice plate 38 having a substantially rectangular lower end, as shown in Fig. 3 and Fig. 5, the resultant plastics optical fiber bundle has a substantially rectangular cross-section. If an ordinary fiber-gathering orifice plate having a circular lower end is used, the optical fiber bundle in cross-section becomes substantially circular and the hexagonal arrangement of fibers in the matrix is distorted. Furthermore, the the fibers become polygonal in shape rather than circular and therefore a plastics optical fiber capable of transferring an image at a high resolving power is difficult to obtain. Preferably, the fiber-gathering hole on the lower end of the fiber-gathering orifice plate is substantially rectangular in shape, and preferably has convex sides also.

In order to manufacture the plastics optical fiber bundle, preferably a spinning-drawing process is adopted in which the core, sheath and matrix components are supplied to their respective nozzles, melt spinning is carried out under conditions such that the spinning draft D defined by the following formula (3) is at least 30:

$$D = (\text{hole diameter of spinning nozzle})^2/(\text{fiber diameter of undrawn fiber})^2 \qquad (3)$$

and drawing is then carried out at a temperature of 100 to 300°C and a draw ratio of 1.05 to 5.0.

A plastics optical fiber obtained by carrying out melt spinning at a spinning draft D lower than 30 is rigid and is easily broken, and it then becomes necessary to reduce the speed of taking up the undrawn optical fiber and, therefore, the shape-retaining stability of the fiber polymer extruded from each nozzle hole is reduced. Therefore, in order to obtain a plastics optical fiber bundle having a good image transfer property, preferably spinning is carried out at a spinning draft D of 30 to 10,000.

Another important property required for the optical fiber bundle is transparency. Although the optical fiber bundle comprises fibers which are uniform and have a substantially circular cross-section, and have an excellent softness, it is also desirable that light transmission loss be kept to a minimum. In order that the plastics optical fiber bundle has sufficient softness, it is necessary to perform spinning at a high draft D. However, a concomitant drastic increase in the transmission loss is often observed. In order to avoid this disadvantage, preferably spinning is carried out under conditions such that the spinning draft D defined by the formula (3) is at least 30, and the resulting undrawn optical fiber is heat-drawn at a temperature of 100 to 200°C at a draw ratio of 1.05 to 5.

Figure 6 is a diagram of a drawing step preferably used in the manufacture of the plastics optical fiber bundle at a high efficiency. In Fig. 6, reference numeral 61 represents a take-up roller for an undrawn optical fiber bundle extruded from the conjugate spinneret, reference numeral 62 represents a drawing heater, reference numeral 63 represents a drawing roller, and reference numeral 64 represents a winder.

Examples of the plastics suitable for forming the core and sheath components of the optical fiber bundle are as follows: polymethyl methacrylate (n = 1.49), a copolymer (n = 1.47 to 1.50) composed mainly of methyl methacrylate, polystyrene (n = 1.58), a copolymer (n = 1.50 to 1.58) composed mainly of styrene, a styrene/acrylonitrile copolymer (n = 1.56), poly-4-methylpentene-1 (n = 1.46), an ethylene/vinyl acetate copolymer (n = 1.46 to 1.50), a polycarbonate (n = 1.50 to 1.57), polychlorostyrene (n = 1.61), polyvinylidene chloride (n = 1.63), polyvinyl acetate (n = 1.47), a methyl methacrylate/styrene, vinyltoluene or $\alpha$-methylstyrene/maleic anhydride terpolymer or quadripolymer (n = 1.50 to 1.58), polydimethylsiloxane (n = 1.40), polyacetal (n = 1.48), polytetrafluoroethylene (n = 1.35), polyvinylidene fluoride (n = 1.42), polytrifluoroethylene (n = 1.40), polyperfluoropropylene (n = 1.34), fluoroethylene copolymers or terpolymers (n = 1.35 to 1.40), a polyvinylidene fluoride/polymethyl methacrylate blend (n = 1.42 to 1.46), copolymers composed mainly of a fluoromethacrylate represented by the general formula $CH_2 = C(CH_3)$-COORf in which Rf stands for $(CH_2)_n(CF_2)_nH$ (n = 1.37 to 1.42), $(CH_2)_m(CF_2)_nF$ (n = 1.37 to 1.40), $CH(CF_3)_2$ (n = 1.38), $C(CF_3)_3$ (n = 1.36), $CH_2CF_2CHFCF_3$ (n = 1.40) or $CH_2CF(CF_3)_2$ (n = 1.37), copolymers of these fluoromethacrylates (n = 1.36 to 1.40), copolymers of such a fluoromethacrylate with methyl methacrylate (n = 1.37 to 1.43), polymers composed mainly of a fluoroacrylate represented by the general formula-$CH_2\overset{\cdot}{C}H \cdot COOR'f$ in which R'f stands for $(CH_2)_m(CF_2)_nF$ (n = 1.37 to 1.40), $(CH_2)_m(CF_2)_nH$ (n = 1.37 to 1.41), $CH_2CF_2CHF$-$CF_3$ (n = 1.41) or $CH(CH_3)_2$ (n = 1.38), copolymers of these fluoroacrylate (n = 1.36 to 1.41), copolymers of such a fluoroacrylate and a fluoromethacrylate as described above (n = 1.36 to 1.41), copolymers of these fluoroacrylate and fluoromethacrylate and methyl methacrylate (n = 1.37 to 1.43), and homopolymers and copolymers (n = 1.37 to 1.42) composed mainly of a 2-fluoroacrylate represented by the general formula $CH_2 = CF \cdot COOR''f$ in which R''f stands for $CH_3$ , $(CH_2)_m(CF_2)_nF$, $(CH_2)_m(CF_2)_nH$, $CH_2CF_2CHFCF_3$ or $C(CF_3)_2$.

Examples of the plastics suitable for the matrix component are as follows: polyamides, polyester elastomers, polyamide elastomers, polystyrene elastomers, polyolefin elastomers, poly-4-methylpentene-1, polyvinylidene fluoride, ionomers, ethylene/ethyl acrylate copolymers, ethylene/vinyl acetate copolymers, vinylidene fluoride copolymers, polymethyl methacrylate, polystyrene, ABS, polybutylene terephthalate and polyethylene, and water-soluble polymers having a solubility of at least 10 g/ℓ in warm water at 80°C, such as polyethylene glycol, polyvinyl alcohol, polyacrylamide, polyvinylpyrrolidone, and carboxymethyl cellulose. In order to obtain an optical fiber bundle capable of transferring a sharp and bright image, preferably a polymer having a flowability larger than that of the sheath-forming polymer for forming cores at the spinning step is selected as the matrix-forming polymer.

The present invention will now be described in detail with reference to the following examples.

In the following examples, the softness was evaluated by measuring the resistance against repeated bending with apparatus shown in Fig. 7. Referring to Fig. 7, the optical fiber bundle was repeatedly bent at a bending radius of 25 mm and a bending angle of 180°, and when the retention ratio of the quantity of transmitted light based on the initial value was lower than 80%, the number of bending repetitions was counted. In Fig. 7, reference numeral 71 represents a bending rod and reference numeral 72 represents a sample fiber.

Example 1

Conjugate spinning was carried out by using a conjugate spinning spinneret having a structure as shown in Fig. 3, and Fig. 5 and wherein angle $\theta_1$ was 15°. The hole number was as shown in Table 1. Polymethyl methacrylate having a refractive index of 1.492 was used as the core component and a perfluoroalkylmethacrylate polymer having a refractive index of 1.415 was used as the sheath component. Furthermore, polymethyl methacrylate was used as the matrix component. A plastcs optical fiber bundle having the properties shown in Table 1 was obtained.

In each plastics optical fiber bundle of Runs 1 to 6 (see Table 1), fibers were hexagonally packed as shown in Fig. 1, and a sharp and fine image could be transmitted and the brightness of that transmitted image was very high. However, in the optical fiber bundle of Run 3, the transmitted image was rough and the brightness was low.

## Table 1

| | Run 1 | Run 2 | Run 3 | Run 4 | Run 5 | Run 6 |
|---|---|---|---|---|---|---|
| Number of holes | 1350 | 1350 | 1350 | 1350 | 1350 | 2990 |
| Core diameter (μ) | 10 | 20 | 20 | 50 | 80 | 10 |
| NA | 0.47 | 0.47 | 0.47 | 0.47 | 0.47 | 0.47 |
| $n_1 - n_2$ | 0.077 | 0.077 | 0.077 | 0.077 | 0.077 | 0.077 |
| Core occupancy ratio (%) | 60 | 69 | 40 | 75 | 80 | 55 |
| Transmission loss (dB/m) | 1.3 | 1.1 | 1.1 | 1.0 | 0.85 | 1.6 |
| Length (m) of optical fiber | 2 | 3 | 3 | 5 | 5 | 2 |
| Brightness index I of optical fiber ($\times 10^{-2}$) | 7.2 | 7.1 | 4.1 | 5.2 | 6.6 | 5.8 |
| Cross-Sectional shape of optical fiber bundle | rectangular | rectangular | rectangular | rectangular | rectangular | rectangular |
| Arrangement of fibers embedded in the matrix | hexagonally packed | hexagonally packed | hexagonally packed | hexagonally packed | hexagonally packed | hexagonally packed |

Example 2

   A optical fiber bundle having 1,350 fibers embedded in the matrix was prepared by carrying out conjugate spinning in the same manner as described in Example 1. The spinneret used to produce the

17

optical fiber of of Run 5 in Table 1 was used. Polymethyl methacrylate having a refractive index of 1.492 was used as the core component, a vinylidene fluoride copolymer having a refractive index of 1.402 as the sheath component, and polymethyl methacrylate as the matrix component.

The resultant optical fiber bundle had a core occupancy ratio of 80%, the a matrix occupancy ratio of 10%, the value NA was 0.51, the value of $(n_1 - n_2)$ was 0.09, the $\alpha$ value was 0.9 dB/m, and the value I was $7.4 \times 10^{-2}$. Therefore a fine and sharp image having a high brightness could be transmitted.

Example 3

A optical fiber bundle having the properties shown in Table 2 was prepared by carrying out conjugate spinning by using a spinneret as shown in Figs. 3 to 5 and a hole number shown in Table 2. Polymethyl methacrylate having a refractive index of 1.492 and a melt flow rate of 1.2 was used as the core-forming polymer, a fluoromethacrylate polymer having a refractive index of 1.415 and a melt flow rate of 6 as the sheath-forming polymer, and a vinylidene fluoride copolymer having a melt flow rate of 12 as the matrix component.

As shown in Table 2, the resultant optical fiber bundle has a very good resolving power.

## Table 2

| | Run 7 | Run 8 | Run 9 | Run 10 |
|---|---|---|---|---|
| Number of holes | 2990 | 2990 | 1350 | 1350 |
| Arrangement of fibers embedded in the matrix | hexagonally packed | hexagonally packed | hexagonally packed | hexagonally packed |
| Sectional shape of fibers | circular | circular | circular | circular |
| Cross-Sectional shape of optical fiber bundle | rectangular | rectangular | rectangular | rectangular |
| Resolving power (test target USAF 1951) (line pair/mm) | group 4, element 5 (25.39) | group 3, element 6 (14.3) | group 1, element 2 (2.24) | group 0, element 6 (1.78) |
| Transmission characteristic (sharpness of transferred image) | very sharp | very sharp | sharp | relatively obscure |
| Brightness index I of optical fiber bundle | $7.9 \times 10^{-2}$ | $10.8 \times 10^{-2}$ | $13.3 \times 10^{-2}$ | $15.1 \times 10^{-2}$ |
| Transmission loss (dB/m) | 2.3 | 1.6 | 0.91 | 0.70 |
| Core occupancy ratio (%) | 60 | 70 | 90 | 93 |
| fiber length (m) | 1 | 1 | 2 | 2 |
| fiber diameter (μ) | 16 | 28 | 180 | 225 |

Example 4

A optical fiber bundle was prepared by carrying out conjugate spinning under conditions shown in Table 3 by using a conjugate spinneret shown in Figs. 3 to 5. Polymethyl methacrylate having a refractive index of

19

1.492 was used as the core-forming polymer, a fluoromethacrylate polymer having a refractive index of 1.415 as the sheath-forming polymer, and a vinylidene fluoride copolymer having a refractive index of 1.4020 as the matrix-forming polymer. The softness under repeated bending and the light-transmitting property expressed by the transmission loss of the resultant optical fiber bundle were determined. The results are shown in Table 3. When the spinning draft defined by the formula (3) was at least 30, the optical fiber bundle had excellent softness and when the spinning draft was at least 80, the softness was improved further. However when the spinning draft was lower than 30, although the light-transmitting property remained good, it became difficult to transfer an image having high resolution, and the optical fiber bundle had a poor softness.

## Table 3

| | Run 11 | Run 12 | Run 13 | Run 14 | Run 15 | Run 16 | Run 17 | Run 18 | Run 19 |
|---|---|---|---|---|---|---|---|---|---|
| fiber diameter (μ) | 10 | 25 | 60 | 100 | 125 | 180 | 350 | 215 | 350 |
| Number of fibers | 1000 | 1000 | 250 | 250 | 250 | 250 | 100 | 250 | 100 |
| Spinning draft D | 4700 | 780 | 130 | 100 | 80 | 30 | 30 | 21 | 8 |
| Resistance against repeated bending (times) | above 1000 | above 1000 | above 1000 | above 1000 | above 1000 | 800 | 500 | 92 | 15 |
| Transmission loss (dB/m) | 3.0 | 2.3 | 2.5 | 1.8 | 1.86 | 1.43 | 0.65 | 0.82 | 0.36 |
| Brightness index I of bundle optical fiber ($\times 10^{-2}$) | 6.5 | 9.0 | 9.8 | 12.6 | 12.7 | 14.5 | 15.8 | 14.1 | 18.0 |
| Resolving power (line pair/mm) | 40.3 | 16.0 | 6.35 | 4.00 | 3.65 | 2.24 | 1.26 | 2.00 | 1.26 |
| Core occupance ratio (%) | 58 | 68 | 78 | 85 | 87 | 90 | 95 | 92 | 95 |
| fiber length (m) | 1 | 1 | 1 | 1 | 1 | 1 | 2 | 2 | 2 |

Plastics optical fiber bundles shown in Runs 11 to 17 of Table 3 were drawn under conditions shown in Table 4 by using the drawing apparatus shown in Fig. 6. The properties of the resultant optical fiber bundles are shown in Table 4.

## Table 4

| | Run 20 | Run 21 | Run 22 | Run 23 | Run 24 | Run 25 | Run 26 |
|---|---|---|---|---|---|---|---|
| Run in Table 3 | 11 | 12 | 13 | 14 | 15 | 16 | 17 |
| Drawing temperature (°C) | 140 | 135 | 135 | 145 | 160 | 180 | 180 |
| Draw ratio | 1.05 | 1.5 | 1.5 | 1.5 | 1.5 | 2.0 | 3.0 |
| Transmission loss (dB/m) | 1.3 | 1.05 | 1.03 | 0.82 | 0.86 | 0.68 | 0.39 |

**Claims**
**Claims for the following Contracting States : DE, FR, GB**

1. A process of manufacturing a plastics optical fiber bundle having a substantially rectangular cross-section and containing 100 to 10,000 hexagonally packed optical fibers embedded in a matrix, each of the fibers having a substantially circular cross-section and a core-sheath structure, said fiber bundle having a core occupancy ratio "S" of at least 50% and a brightness index "I" of at least $4.5 \times 10^{-2}$, which is defined as

$$I = S \cdot NA^2 \cdot 10^{-(\alpha L/10)}$$

wherein S is the cross sectional area of the cores compared with the cross sectional area of the entire bundle, $\alpha$ is the transmission loss in dB/m, NA is the numerical aperture and L is the fiber length in meters and being between 0.1 and 20 m; the process comprising:
   - using a conjugate spinneret containing at least four superposed orifice plates formed by the sequence of: (a) a core forming orifice plate (31) having 100 to 10,000 core-forming nozzle holes (31a), (b) a sheath forming orifice plate (32) having the same number of sheath-forming nozzle holes (32a), (c) a matrix forming orifice plate (33,43) having the same number of matrix-forming nozzle holes (33a,43a) and (d) an orifice plate (38) having a substantially rectangular fiber-gathering hole (39), the end portions of the holes (33a,43a) in the matrix forming orifice plate (33,43) on the side facing the fiber gathering orifice plate (38) being conically enlarged;
   - supplying melts of a core forming polymer, of a sheath forming polymer and of a matrix forming polymer to the nozzle holes of said respective orifice plates;
   - extruding the core-forming polymer through the core-forming nozzle holes (31a) to form the core, the sheath-forming polymer through the sheath-forming nozzle holes (32a) to form a fiber of a core-sheath structure, and the matrix-forming polymer through the matrix-forming nozzle holes (33a) to cover the fiber with the matrix polymer under such conditions that the spinning draft D, defined as

   D = (hole diameter of a spinning nozzle)$^2$/(fiber diameter of undrawn fiber)$^2$

   has a value of at least 30,
   - gathering and adhering together the resulting optical fibers in the gathering hole (49) and,
   - drawing the gathered and adhered fibers at a temperature of 100 to 300°C at a draw ratio of 1.05 to 5.0 to form said fiber bundle.

2. A process according to claim 1, wherein the conjugate spinneret is a non-pipe-implanted spinneret having a sheath-forming polymer passage between the core-forming orifice plate (31) and the sheath-forming orifice plate (32) and a matrix-forming polymer passage between the sheath-forming orifice plate (32) and the matrix-forming orifice plate (33,43).

3. A process according to claim 1 or claim 2 wherein the centers of adjacent core-forming nozzle holes (31a) are spaced apart by a distance P and the conical ends of the matrix-forming nozzle holes (43a) have a diameter R such that

2P ≧ R ≧ P.

## Claims for the following Contracting State : NL

1. A process of manufacturing a plastics optical fiber bundle having a substantially rectangular cross-section and containing 100 to 10,000 hexagonally packed optical fibers embedded in a matrix each of the fibers having a substantially circular cross-section and a core-sheath structure, said fiber bundle having a core occupancy ratio "S" of at least 50%; the process comprising:
   - using a conjugate spinneret containing at least four superimposed orifice plates formed by the sequence of: (a) a core-forming orifice plate (31) having 100 to 10,000 core-forming nozzle holes (31a), (b) a sheath-forming orifice plate (32) having the same number of sheath-forming nozzle holes (32a), (c) a matrix-forming orifice plate (33,43) having the same number of matrix-forming nozzle holes (33a,43a), and (d) an orifice plate (38) having a substantially rectangular fiber-gathering hole (39), the end portions of the holes (33a,43a) in the matrix forming orifice plate (33,43) on the side facing the fiber-gathering orifice plate being conically enlarged;
   - supplying melts of a core-forming polymer, of a sheath forming polymer and a matrix forming polymer to the nozzle holes of said respective orifice plates;
   - extruding the core-forming polymer through the core-forming nozzle holes (31a) to form the core, the sheath-forming polymer through the sheath-forming nozzle holes (32a) to form a fiber of core-sheath structure, and the matrix-forming polymer through the matrix-forming nozzle holes (33a) to cover the fiber with the matrix polymer;
   - gathering and adhering together the resulting optical fibers in the gathering hole (49); and
   - drawing the gathered and adhered fibers to form said optical fiber bundle having a brightness index I, of at least 4.5 x 10$^{-2}$, which is defined as

   $$I = S \cdot NA^2 \cdot 10^{-(\alpha L/10)}$$

   wherein S is the cross-sectional area of the cores compared with the cross-sectional area of the entire bundle, $\alpha$ is the transmission loss of the fiber in dB/m, NA is the numerical aperture and L is the fiber length in meters and being between 0.1 and 20 m.

2. A process according to claim 1, wherein the spinning draft D defined as

   D = (hole diameter of a spinning nozzle)$^2$/(fiber  diameter of undrawn fiber)$^2$

   has a value of at least 30.

3. A process according to claim 1 or claim 2, wherein the gathered and adhered fibers are drawn at a temperature of 100 to 300°C at a draw ratio of 1.05 to 5.0 to form said fiber bundle.

4. A process according to any one of claims 1 to 3, wherein the conjugate spinneret is a non-pipe-implanted spinneret having a sheath-forming polymer passage between the core-forming orifice plate (31) and the sheath-forming orifice plate (32) and a matrix-forming polymer passage between the sheath-forming orifice plate (32) and the matrix-forming orifice plate (33,43).

5. A process according to any one of claims 1 to 4, wherein the centers of adjacent core-forming nozzle holes (31a) are spaced apart by a distance P and the conical ends of the matrix-forming nozzle holes (43a) have a diameter R such that

   2P ≧ R ≧ P.

## Patentansprüche
## Patentansprüche für folgende Vertragsstaaten : DE, FR, GB

1. Verfahren zur Herstellung eines optischen Kunststoff-Faserbündels mit einem im wesentlichen rechtekkigen Querschnitt, das 100 bis 10.000 hexagonal gepackte, in einer Matrix eingebettete optische Fasern enthält, wobei jede der Fasern einen im wesentlichen kreisförmigen Querschnitt sowie eine Kern-Mantel-Struktur aufweist, wobei das Faserbündel ein Kernbesetzungsverhältnis "S" von mindestens 50 % sowie einen Helligkeitsindex "I" von mindestens $4,5 \times 10^{-2}$ aufweist, welcher definiert ist als

$$I = S \cdot NA^2 \cdot 10^{-(\alpha L/10)}$$

worin S die Querschnittsfläche der Kerne gegenüber der Querschnittsfläche des gesamten Bündels ist, $\alpha$ der Übertragungsverlust in dB/m ist, NA die numerische Apertur ist und L die Faserlänge in Meter ist, welche zwischen 0,1 und 20 m liegt; wobei das Verfahren folgende Stufen umfaßt:
- Verwendung einer konjugierten Spinndüse, die mindestens vier übereinander angeordnete Lochscheiben enthält, welche in der Reihenfolge: (a) kernbildende Lochscheibe (31) mit 100 bis 10.000 kernbildenden Düsenlöchern (31a), (b) mantelbildende Lochscheibe (32) mit der gleichen Anzahl an mantelbildenden Düsenlöchern (32a), (c) matrixbildende Lochscheibe (33, 43) mit der gleichen Anzahl an matrixbildenden Düsenlöchern (33a, 43a) und (d) Lochscheibe (38) mit einem im wesentlichen rechteckigen faservereinigenden Loch (39), angeordnet sind, wobei die Endbereiche der Löcher (33a, 43a) in der matrixbildenden Lochscheibe (33, 43) auf der Seite, welche der faservereinigen den Lochscheibe (38) gegenüberliegt, konisch erweitert sind;
- Zuführen von Schmelzen eines kernbildenden Polymers, eines mantelbildenden Polymers und eines matrixbildenden Polymers zu den Düsenlöchern der jeweiligen Lochscheiben;
- Extrudieren des kernbildenden Polymers durch die kernbildenden Düsenlöcher (31a) zur Bildung des Kerns, des mantelbildenden Polymers durch die mantelbildenden Düsenlöcher (32a) zur Bildung einer Faser mit einer Kern-Mantel-Struktur, und des matrixbildenden Polymers durch die matrixbildenden Düsenlöcher (33a), um die Faser mit dem Matrixpolymer unter solchen Bedingungen zu umhüllen, daß der Spinnverzug D, definiert als

$$D = (\text{Lochdurchmesser der Spinndüse})^2 / (\text{Faserdurchmesser der ungestreckten Faser})^2$$

einen Wert von mindestens 30 hat,
- Vereinigen und Aneinanderhaften der resultierenden optischen Fasern in dem Vereinigungsloch (39), und
- Strecken der vereinigten und aneinandergehafteten Fasern bei einer Temperatur von 100 bis 300°C bei einem Streckverhältnis von 1,05 bis 5,0 zur Bildung des Faserbündels.

2. Verfahren nach Anspruch 1, wobei die konjugierte Spinndüse eine nicht in eine Röhre eingebrachte Spinndüse ist mit einem Durchgang für das mantelbildende Polymer zwischen der kernbildenden Lochscheibe (31) und der mantelbildenden Lochscheibe (32) und einem Durchgang für das matrixbildende Polymer zwischen der mantelbildenden Lochscheibe (32) und der matrixbildenden Lochscheibe (33, 43).

3. Verfahren nach Anspruch 1 oder 2, wobei die Zentren benachbarter kernbildender Düsenlocher (31a) von einander durch einen Abstand P getrennt sind und die konischen Enden der matrixbildenden Düsenlöcher (43a) einen Durchmesser R aufweisen, so daß

$$2P \geq R \geq P$$

gilt.

**Patentansprüche für folgenden Vertragsstaat : NL**

1. Verfahren zur Herstellung eines optischen Kunststoff-Faserbündels mit im wesentlichen rechteckigen Querschnitt, das 100 bis 10.000 hexagonal gepackte, in einer Matrix eingebettete optische Fasern enthält, wobei jede der Fasern einen im wesentlichen kreisförmigen Querschnitt und eine Kern-Mantel-Struktur besitzt, wobei das Faserbündel ein Kernbesetzungsverhältnis "S" von mindestens 50 % aufweist; wobei das Verfahren folgende Stufen umfaßt:
- Verwendung einer konjugierten Spinndüse, die mindestens vier übereinander angeordnete Lochscheiben enthält, welche in der Reihenfolge: (a) kernbildende Lochscheibe (31) mit 100 bis 10.000 kernbildenden Düsenlöchern (31a), (b) mantelbildende Lochscheibe (32) mit der gleichen Anzahl an mantelbildenden Düsenlöchern (32a), (c) matrixbildende Lochscheibe (33, 43) mit der gleichen Anzahl an matrixbildenden Düsenlöchern (33a, 43a) und (d) Lochscheibe (38) mit einem im wesentlichen rechteckigen faservereinigenden Loch (39), angeordnet sind, wobei die Endbereiche der Löcher (33a, 43a) in der matrixbildenden Lochscheibe (33, 43) auf der Seite, welche der faservereinigenden Lochscheibe gegenüberliegt, konisch erweitert sind;

- Zuführen von Schmelzen eines kernbildenden Polymers, eines mantelbildenden Polymers und eines matrixbildenden Polymers zu den Düsenlöchern der jeweiligen Lochscheiben;
- Extrudieren des kernbildenden Polymers durch die kernbildenden Düsenlöcher (31a) zur Bildung des Kerns, des mantelbildenden Polymers durch die mantelbildenden Düsenlöcher (32a) zur Bildung einer Faser mit einer Kern-Mantel-Struktur, und des matrixbildenden Polymers durch die matrixbildenden Düsenlöcher (33a), um die Faser mit dem Matrixpolymer zu umhüllen;
- Vereinigen und Aneinanderhaften der resultirenden optischen Fasern in dem Vereinigungsloch (39); und
- Strecken der vereinigten und aneinandergehafteten Fasern zur Bildung des optischen Faserbündels mit einem Helligkeitsindex I von mindestens 4,5 x $10^{-2}$, welcher definiert ist als

$$I = S \bullet NA^2 \bullet 10^{-(\alpha L/10)}$$

worin S die Querschnittsfläche der Kerne gegenüber der Querschnittsfläche des gesamten Bündels ist, $\alpha$ der Übertragungsverlust in dB/m ist, NA die numerische Apertur ist und L die Faserlänge in Meter ist, welche zwischen 0,1 und 20 m liegt.

2. Verfahren nach Anspruch 1, wobei der Spinnverzug D, definiert als

$$D = (\text{Lochdurchmesser einer Spinndüse})^2 / (\text{Faserdurchmesser der ungestreckten Faser})^2$$

einen Wert von mindestens 30 hat.

3. Verfahren nach Anspruch 1 oder 2, wobei die vereinigten und aneinandergehafteten Fasern bei einer Temperatur von 100 bis 300°C bei einem Streckverhältnis von 1,05 bis 5,0 zur Bildung des Faserbündels gestreckt werden.

4. Verfahren nach mindestens einem der Ansprüche 1 bis 3, wobei die konjugierte Spinndüse eine nicht in eine Röhre eingebrachte Spinndüse ist mit einem Durchgang für das mantelbildende Polymer zwischen der kernbildenden Lochscheibe (31) und der mantelbildenden Lochscheibe (32) und einem Durchgang für das matrixbildende Polymer zwischen der mantelbildenden Lochscheibe (32) und der matrixbildenden Lochscheibe (33, 43).

5. Verfahren nach mindestens einem der Ansprüche 1 bis 4, wobei die Zentren benachbarter kernbildender Düsenlöcher (31a) voneinander durch einen Abstand P getrennt sind und die konischen Enden der matrixbildenden Düsenlöcher (43a) einen Durchmesser R aufweisen, so daß

$$2P \geqq R \geqq P$$

gilt.

**Revendications**
**Revendications pour les Etats contractants suivants : DE, FR GB**

1. Procédé de fabrication d'un faisceau de fibres optiques en matière plastique, présentant une section droite pratiquement rectangulaire et renfermant de 100 à 10000 fibres optiques entassées hexagonalement et incorporées à une matrice, chaque fibre présentant une section droite pratiquement circulaire et une structure noyau-gaine, ledit faisceau de fibres ayant un taux, d'occupation "S" d'au moins 50 % et un indice de brillance "I" d'au moins 4,5.$10^{-2}$, qui est défini par

$$I = S.NA^2.10^{-(\alpha L/10)},$$

où S est l'aire de la section droite des noyaux, rapportée à l'aire de la section droite du faisceau entier, $\alpha$ est la perte de transmission en dB/m, NA est l'ouverture numérique et L est la longueur de la fibre en mètres, longueur comprise entre 0,1 et 20 m; le procédé consistant à:

- utiliser une filière composite comportant au moins quatre plateaux à orifices superposés, constitués par la séquence suivante: (a) un plateau à orifices formant le noyau (31), pourvu de 100 à 10000 trous de buse (31a), pour former le noyau, (b) un plateau à orifices formant la gaine (32) possédant le même nombre de trous de buse (32a), pour former la gaine, (c) un plateau à orifices formant la matrice (33, 43) possédant le même nombre de trous de buse (33a, 43a), pour former la matrice, et (d) un plateau à orifices (38) comportant un trou pratiquement rectangulaire (39), pour regrouper les fibres, les portions terminales des trous (33a, 43a) du plateau à orifices (33, 43), du côté faisant face au plateau à orifice (38) qui regroupe les fibres, étant élargies en forme de cônes,
- fournir, aux trous des buses desdits plateaux à orifices respectifs, des masses fondues d'un polymère formant le noyau, d'un polymère formant la gaine et d'un polymère formant la matrice,
- extruder le polymère formant le noyau à travers les trous de buse (31a), afin de former le noyau, extruder le polymère formant la gaine à travers les trous de buse (32a) formant la gaine, afin de former une fibre de structure noyau-gaine, et extruder le polymère formant la matrice à travers les trous de buse (33a) formant la matrice, afin de recouvrir la fibre avec le polymère de la matrice, dans des conditions telles que le rapport de filage D, défini par

$$D = \frac{(\text{diamètre du trou d'une buse de filière})^2}{(\text{diamètre de la fibre non étirée})^2},$$

ait une valeur d'au moins 30,
- regrouper et faire adhérer ensemble les fibres optiques obtenues, dans le trou de regroupement (49), et
- étirer les fibres regroupées et collées, à une température de 100 à 300°C et avec un rapport d'étirage de 1,05 à 5,0, afin de former ledit faisceau de fibres.

2. Procédé selon la revendication 1, dans lequel la filière composite est une filière sans implantation de tubes, qui présente un passage de polymère formant la gaine, entre le plateau à orifices (31) formant le noyau et le plateau à orifices (32) formant la gaine, et un passage de polymère formant la matrice, entre le plateau à orifices (32) formant la gaine et le plateau à orifices (33,43) formant la matrice.

3. Procédé selon la revendication 1 ou 2, dans lequel les centres des trous de buse (31a) adjacents formant le noyau sont espacés d'une distance P et les extrémités coniques des trous de buse (43a) formant la matrice ont un dimaètre R, tels que

$2P \geq R \geq P$.

**Revendications pour l'Etat contractant suivant : NL**

1. Procédé de fabrication d'un faisceau de fibres optiques en matière plastique, présentant une section droite pratiquement rectangulaire et renfermant de 100 à 10000 fibres optiques entassées hexagonalement et incorporées à une matrice, chaque fibre présentant une section droite pratiquement circulaire et une structure noyau-gaine, ledit faisceau de fibres ayant un taux d'occupation "S" d'au moins 50 %, le procédé consistant à:

- utiliser une filière composite comportant au moins quatre plateaux à orifices superposés, constitués par la séquence suivante: (a) un plateau à orifices formant le noyau (31), pourvu de 100 à 10000 trous de buse (31a), pour former le noyau, (b) un plateau à orifices formant la gaine (32) possédant le même nombre de trous de buse (32a), pour former la gaine, (c) un plateau à orifices formant la matrice (33, 43) possédant le même nombre de trous de buse (33a, 43a), pour former la matrice, et (d) un plateau à orifices (38) comportant un trou pratiquement rectangulaire (39), pour regrouper les fibres, les portions terminales des trous (33a, 43a) du plateau à orifices (33, 43), du côté faisant face au plateau à orifice (38) qui regroupe les fibres, étant élargies en forme de cônes,
- fournir, aux trous des buses desdits plateaux à orifices respectifs, des masses fondues d'un polymère formant le noyau, d'un polymère formant la gaine et d'un polymère formant la matrice,

- extruder le polymère formant le noyau à travers les trous de buse (31a), afin de former le noyau, extruder le polymère formant la gaine à travers les trous de buse (32a) formant la gaine, afin de former une fibre de structure noyau-gaine, et extruder le polymère formant la matrice à travers les trous de buse (33a) formant la matrice, afin de recouvrir la fibre avec le polymère de la matrice,
- regrouper et faire adhérer ensemble les fibres optiques obtenues, dans le trou de regroupement (49), et
- étirer les fibres regroupées et collées, afin de former ledit faisceau de fibres optiques, possédant un indice de brillance "I" d'au moins $4,5.10^{-2}$, qui est défini par

$$I = S.NA^2.10^{-(\alpha L/10)} ,$$

où S est l'aire de la section droite des noyaux, rapportée à l'aire de la section droite du faisceau entier, $\alpha$ est la perte de transmission en dB/m, NA est l'ouverture numérique et L est la longueur de la fibre en mètres, longueur comprise entre 0,1 et 20 m.

2.  Procédé selon la revendication 1, dans lequel le rapport de filage D, défini par

$$D = \frac{(\text{diamètre du trou d'une buse de filière})^2}{(\text{diamètre de la fibre non étirée})^2} ,$$

a une valeur d'au moins 30.

3.  Procédé selon la revendication 1 ou 2, dans lequel les fibres regroupées et collées sont étirées à une température de 100 à 300°C et avec un rapport d'étirage de 1,05 à 5,0, afin de former ledit faisceau de fibres.

4.  Procédé selon une quelconque des revendications 1 à 3, dans lequel la filière composite est une filière sans implantation de tubes, qui présente un passage de polymère formant la gaine, entre le plateau à orifices (31) formant le noyau et le plateau à orifices (32) formant la gaine, et un passage de polymère formant la matrice, entre le plateau à orifices (32) formant la gaine et le plateau à orifices (33,43) formant la matrice.

5.  Procédé selon une quelconque des revendications 1 à 4, dans lequel les centres des trous de buse (31a) adjacents formant le noyau sont espacés d'une distance P et les extrémités coniques des trous de buse (43a) formant la matrice ont un dimaétre R, tels que

$$2P \geqq R \geqq P.$$

# Fig. 1

# Fig. 2

# Fig. 3

# Fig. 4

# Fig. 5

# Fig. 6

# Fig. 7

50g